Europäisches Patentamt

European Patent Office

Office européen des brevets

(11) Veröffentlichungsnummer : **0 065 205**
**B1**

(12) **EUROPÄISCHE PATENTSCHRIFT**

(45) Veröffentlichungstag der Patentschrift :
**25.07.84**

(21) Anmeldenummer : **82103852.8**

(22) Anmeldetag : **05.05.82**

(51) Int. Cl.$^3$ : **C 03 C 9/00, C 03 C 5/00,**
**C 04 B 35/14, C 04 B 41/06**

(54) **Bleifreie Glasuren für Weissware.**

(30) Priorität : **11.05.81 US 262086**

(43) Veröffentlichungstag der Anmeldung :
**24.11.82 Patentblatt 82/47**

(45) Bekanntmachung des Hinweises auf die Patenterteilung : **25.07.84 Patentblatt 84/30**

(84) Benannte Vertragsstaaten :
**DE FR GB IT LU**

(56) Entgegenhaltungen :
**DD-A- 108 508**
**SOVIET INVENTIONS ILLUSTRATED, Sektion Ch,**
**Woche C 10, 16. April 1980 DERWENT PUBLICATIONS**
**LTD., London, L 01**

(73) Patentinhaber : **Mobay Chemical Corporation**
**Penn Lincoln Parkway West**
**Pittsburgh, Pennsylvania 15205 (US)**

(72) Erfinder : **O'Conor, Eugene F.**
**33 Chiara Court**
**Towson Maryland 21204 (US)**

(74) Vertreter : **Drope, Rüdiger, Dr. et al**
**c/o Bayer AG Zentralbereich Patente Marken und**
**Lizenzen**
**D-5090 Leverkusen 1, Bayerwerk (DE)**

EP 0 065 205 B1

Jouve, 18, rue St-Denis, 75001 Paris, France

**0 065 205**

**Beschreibung**

Seit vielen Jahren besteht Interesse an der Entwicklung einer bleifreien Glasur mit niedriger Schmelztemperatur, niedriger Viskosität, einem breiten Brennbereich und einem hohen Brechungsindex, wie sie für bleihaltige Glasuren kennzeichnend sind. Es gibt mehrere Gründe für dieses Interesse. Gelegentlich auftretende Fälle von Bleivergiftung waren die Folge der Verwendung falsch gebrannter und formulierter bleihaltiger Glasuren auf Keramikware. Wenngleich es leicht ist, bleihaltige Glasuren herzustellen, die sicher sind (in der Tat enthalten einige der widerstandsfähigsten Glasuren Blei), wird das Problem der Bleivergiftung durch Verwendung bleifreier Glasuren vollständig vermieden. Außerdem sind in den meisten Staaten Grenzwerte für den Bleigehalt von Abwasser, das in Flüsse und Bäche eingeleitet wird, gesetzlich festgelegt worden. Überdies legen neuere Regierungsverordnungen Verminderungen der Bleiwerte im Blut für Arbeiter fest, die der Einwirkung von Blei ausgesetzt sind. Diese Verordnungen erfordern den Einbau kostspieliger neuer Geräte seitens der Anwender bleihaltiger Glasuren. Diese Kosten wären durch die Verwendung einer bleifreien Glasur vollständig zu vermeiden. Da schließlich bleihaltige Glasuren in beträchtlichem Maße stärker korrodierend als bleifreie Glasuren auf die feuerfesten Brennofenmaterialien wirken, ließe die Verwendung einer bleifreien Glasur eine Verlängerung der Haltbarkeit der Brennöfen erwarten.

Seit vielen Jahren ist eine Anzahl bleifreier Glasuren bekannt. Glasuren, die oberhalb von 1 250 °C gebrannt werden, sind im allgemeinen bleifrei. Der Grund hierfür ist, daß sich bleihaltige Glasuren oberhalb von 1 250 °C unter übermäßiger Verflüchtigung von Bleioxid zersetzen. Diese Hochtemperaturglasuren werden auf Sanitärporzellan und auf Hartporzellan verwendet. Diese bleifreien Glasuren sind jedoch wegen der sehr hohen Garbrandtemperatur für eine Verwendung bei Tafelgeschirr, Fliesen und Kunstporzellan meistens nicht geeignet.

Komplexe Alkali-, Erdalkali- und Boroaluminiumsilicat-Glasuren wurden entwickelt, die im Laboratorium mit Erfolg auf feinkeramische Gegenstände von der Art des Tafelgeschirrs aufgebracht werden können. Wenn jedoch die Verwendung dieser Glasuren im großtechnischen Maßstab versucht wird, treten oft Fehler auf. Außerdem wurden Glasuren für halbglasartiges Steingut entwickelt, bei denen diese komplexen Glasuren mit Porzellanglasuren mit hohem Alkali-Gehalt kombiniert wurden. Diese Glasuren sind jedoch für glasiges (vitreous) Tafelgeschirr, Kunstporzellan und Fliesen wegen ihres hohen thermischen Ausdehnungskoeffizienten nicht geeignet, der auf den verwendeten Substraten zur Bildung von Haarrissen führt.

Die Verwendung von Zinkoxid in Glasuren ist ebenfalls wohlbekannt. In kleinen Mengen ist es ein sehr aktives Flußmittel, kann jedoch, wenn es in größeren Mengen zugesetzt wird, Glanzlosigkeit hervorrufen. Es wird selten unterhalb von 950 °C verwendet, da es bei niedrigeren Temperaturen nur geringe Flußmittel-Eigenschaften besitzt. In Verbindung mit anderen Flußmitteln, wie Alkalien und Borsäure, ist Zink ein sehr wertvolles Material, das zur Bildung einer glatten, fehlerfreien Glasuroberfläche beiträgt. Umgekehrt kann Zinkoxid, wenn es in großen Mengen eingesetzt wird, zu Kriechen, Lochfraß und Nadelstichen führen. Es gibt jedoch ein Hauptproblem bei der Verwendung von Zink. In den Glasuren nach dem Stand der Technik ist Zink dafür bekannt, daß es eine tiefgreifende Wirkung auf die auf den verschiedenen Pigmentstoffen erhaltenen Farben ausübt. Viele solcher Pigmentstoffe können nicht verwendet werden. Infolgedessen wird Zink zwar in Glasuren für Sanitärporzellan und Fliesen verwendet, wo eine begrenzte Farbpalette annehmbar ist, während es für Tafelgeschirr- oder Kunstporzellan-Glasuren, bei denen eine volle Farbpalette erforderlich ist, nicht eingesetzt wird. Auch für Zierfliesen, wo die volle Farbpalette benötigt wird, wird Zink nicht verwendet.

Die vorliegende Erfindung richtet sich auf einen engen Bereich von Formulierungen, innerhalb dessen es möglich ist, die vorteilhaften Wirkungen des Zinkoxids mit angemessener Stabilität der Verzierungen durch Unterglasurfarben zu vereinigen und damit die Verwendung einer ganzen Farbpalette zu ermöglichen. Insbesondere betrifft die vorliegende Erfindung eine keramische Fritte, die beim Zusammenschmelzen aus den folgenden Bestandteilen besteht :

a) von 4,0 bis 6,5 Gew.-% einer Verbindung ausgewählt aus Kaliumoxid, Natriumoxid, Lithium-oxid oder Gemischen aus diesen ;
b) von 7,0 bis 12,5 Gew.-% Zinkoxid ;
c) von 7,0 bis 12,0 Gew.-% Kalziumoxid ;
d) von 0 bis 0,7 Gew.-% Magnesiumoxid
e) von 0 bis 5,0 Gew.-% Bariumoxid ;
f) von 2,0 bis 4,0 Gew.-% Strontiumoxid ;
g) von 2,5 bis 6,0 Gew.-% Boroxid ;
h) von 7,0 bis 8,5 Gew.-% Aluminiumoxid ;
i) von 54,0 bis 60,0 Gew.-% Siliciumdioxid und
j) von 0 bis 1,0 Gew.-% Zirkoniumoxid ;

sämtliche angegebenen Gewichtsprozente sind bezogen auf das Gesamtgewicht sämtlicher Bestandteile (a) bis (j).

2

**0 065 205**

Die vorliegende Erfindung richtet sich auch auf eine keramische Glasur, die aus der vorbezeichneten keramischen Fritte hergestellt wird. Im allgemeinen umfaßt die keramische Glasur der vorliegenden Erfindung mindestens 80 Gew.-% der vorbeschriebenen keramischen Fritte, wobei der Rest zu 100 % ausgewählt wird aus der Gruppe Bentonit, Ton, Flint, Aluminiumoxid, Pigmente, Trübungsmittel und Mischungen aus diesen. Nach dem Brennen besitzt diese Glasur eine Zusammensetzung, die aus den folgenden Anteilen besteht :

a) von  3,5 bis  6,5 Gew.-% eines Bestandteils aus der Gruppe Kaliumoxid, Natriumoxid, Lithiumoxid und Mischungen aus diesen ;
b) von  6,0 bis 12,5 Gew.-% Zinkoxid ;
c) von  6,0 bis 12,0 Gew.-% Kalziumoxid ;
d) von  0  bis  0,7 Gew.-% Magnesiumoxid ;
e) von  0  bis  5,0 Gew.-% Bariumoxid ;
f) von  1,7 bis  4,0 Gew.-% Strontiumoxid ;
g) von  2,0 bis  6,0 Gew.-% Borsäure ;
h) von  7,0 bis 12,0 Gew.-% Aluminiumoxid ;
i) von 53,0 bis 61,0 Gew.-% Siliciumdioxid ;
j) von  0  bis  8,0 Gew.-% Zirkoniumoxid (worin etwa verwendete Trübungsmittel enthalten sind) ;

sämtliche dieser Gewichte sind auf das Gesamtgewicht der Bestandteile (a) bis (j) plus etwaiger zusätzlicher Pigmente, die zur Färbung einer solchen Glasur zugesetzt wurden, bezogen. Diese Glasur kann auch insgesamt oder teilweise unmittelbar aus den Rohstoffen hergestellt werden, ohne daß zunächst eine Fritte hergestellt wird. Schließlich betrifft die vorliegende Erfindung auch ein Produkt, das unter Verwendung der hierin beschriebenen neuen keramischen Glasur hergestellt wurde. Im allgemeinen wird die Glasur auf einen keramischen Gegenstand aufgetragen, und der damit beschichtete Gegenstand wird bei einer Temperatur von 1 038 °C bis 1 204 °C (1 900° bis 2 200 °F) gebrannt.

Wenn die Gesamtkonzentration an Alkali (d. h. Kalium-, Natrium- und/oder Lithium-Oxiden) in der Glasur unter 3,5 Gew.-% gesenkt wird, fehlt der Glasur die angemessene Fließfähigkeit, um während des Brennens einen glatten Überzug zu bilden. Wenn die Gesamtkonzentration 6,5 Gew.-% übersteigt, findet ein übermäßiger Abbau der Unterglasur-Verzierungen statt. Die Mengen jedes der drei Alkalien sind nicht kritisch, solange die Gesamtmenge aller drei innerhalb des angegebenen Bereichs liegt.

Wenn die Konzentration an Zinkoxid in der Glasur unter 6,0 Gew.-% gesenkt wird, wirkt dieses nicht mehr als Flußmittel zur Erzeugung einer fehlerfreien Oberfläche. In ähnlicher Weise treten, wenn die Konzentration an Zinkoxid 12,5 Gew.-% übersteigt, die typischen Zinkoxid-Defekte des Lochfraßes und der Nadelstich-Bildung auf.

Wenn die Konzentration an Kalziumoxid in der Glasur auf weniger als 6,0 Gew.-% gesenkt wird, findet man eine unzureichende Beständigkeit gewisser Unterglasurfarben und besonders der Chrom-Zinn-Rosa-Farbstoffe. Wenn die Konzentration 12,0 Gew.-% übersteigt, besitzt die Glasur nicht ausreichende Fließfähigkeit.

Eine kleine Menge Magnesiumoxid ist im allgemeinen nützlich für eine Verminderung des Ausdehnungskoeffizienten der Glasur. Sie sollte jedoch auf 0,7 Gew.-% begrenzt sein, weil das Magnesiumoxid die Entwicklung eines kurzen Verarbeitungsbereichs bedingt.

Bariumoxid kann zur Erhöhung des Brechungsindex der Glasur verwendet werden. Es sollte jedoch auf 5,0 Gew.-% begrenzt werden, um eine angemessene Fließfähigkeit der Beschichtung sicher zu stellen.

Glasuren, die weniger als 1,7 Gew.-% Strontiumoxid enthalten, enthalten im allgemeinen übermäßige Konzentrationen aktiver Flußmittel, die die Unterglasur-Verzierungen abbauen. Andererseits vermindern Konzentrationen oberhalb von 4,0 Gew.-% die Fließfähigkeit des Überzugs.

Die Konzentration an Borsäure muß mindestens 2,0 Gew.-% betragen, damit eine angemessene Fließfähigkeit des Überzugs sichergestellt ist. Sie darf jedoch 6,0 Gew.-% nicht übersteigen, um einen übermäßigen Abbau der Unterglasur-Verzierungen zu vermeiden.

Die Konzentration an Siliciumdioxid muß mindestens 53,0 Gew.-% betragen, damit eine Zerstörung der Unterglasur-Verzierungen vermieden wird. Die Konzentration darf 61,0 Gew.-% nicht übersteigen, oder eine unzureichende Fließfähigkeit ist die Folge.

Die Konzentration an Aluminiumoxid in der Glasur muß zwischen 7,0 und 12,0 Gew.-% liegen, damit ein angemessenes Verhältnis zu den Siliciumdioxid-Konzentrationen aufrecht erhalten wird, wie dies wohlbekannter und üblicher Praxis entspricht. Geringe Zusätze von Zirkoniumoxid, bis zu 1,0 Gew.-%, können hinzugefügt werden, um die Haltbarkeit der Glasur zu verbessern. Bis zu 8,0 Gew.-% Zirkoniumoxid von Trübungsmittel-Qualität können zur Erzeugung einer Trübung zugesetzt werden.

Die Rohstoffe zur Herstellung dieser Glasuren sind diejenigen, die üblicherweise in der Glasherstellung als Quellen für Siliciumdioxid, Aluminiumoxid und der anderen erforderlichen Metalloxide verwendet werden. Die meisten dieser Stoffe sind entweder Oxide oder Karbonate. Normalerweise werden die Rohstoffe eingewogen und gemischt. Dann werden sie zu einem Glas verschmolzen und anschliessend gefrittet. Die trockene Fritte wird dann mehrere Stunden in einer Kugelmühle zu einem Pulver vermahlen. Anschließend wird ein Schlicker für das Aufbringen in der üblichen, Fachleuten bekannten Weise hergestellt. Typische Formulierungen hierfür sind :

3

| a) pulverisierte Fritte | 100 Teile |
|---|---|
| Bentonit | 2 Teile |
| Wasser | 45 Teile |
| b) pulverisierte Fritte | 90 Teile |
| Kaolin-Ton | 10 Teile |
| Wasser | 45 Teile |

Jedoch können höhere Anteile der Glasur-Formulierung, wie in der Fachwelt wohlbekannt ist, unmittelbar, ohne vorheriges Fritten dem Glasur-Schlicker zugesetzt werden. Der Schlicker wird in einer Kugelmühle vermahlen, und durch weiteren Wasserzusatz auf die geeignete Viskosität eingestellt. Er wird dann mit Hilfe wohlbekannter Verfahren des Aufbringens wie Aufspritzen, Eintauchen oder Wasserfall auf einen üblichen Keramikgegenstand aufgebracht. Der beschichtete Keramikgegenstand wird dann getrocknet und zum Brennen in einen Keramik-Brennofen gestellt. Das Brennen erfolgt im allgemeinen bei Temperaturen von 1 038 °C bis 1 204 °C (1 900° bis 2 200 °F) nach den üblichen Brennprogrammen. Das Ergebnis dieses Verfahrens ist eine Glasur auf dem keramischen Gegenstand, die frei von Fehlern und frei von Haarrissen ist und die nicht irgendwelche Unterglasur-Verzierungen zerstört hat, die vorher auf den keramischen Gegenstand aufgebracht wurden.

Die Erfindung wird durch die folgenden Beispiele näher erläutert, ist jedoch nicht auf diese beschränkt. Sofern nicht anders angegeben, beziehen sich in den Beispielen sämtliche Angaben über Teile und Prozente auf das Gewicht.

Beispiele

Beispiel 1

Die folgenden Rohstoffe von Standard-Güte und -Qualität für keramische Anwendungen wurden eingewogen und in einem Zwillingstrommelmischer (V-Mischer) miteinander vermischt.

| Stoff | Menge Teile |
|---|---|
| Siliciumdioxid | 1 162 |
| Feldspat | 813 |
| Zinkoxid | 335 |
| Borsäure | 294 |
| Kreide | 507 |
| Zirkon | 23,4 |
| Strontiumcarbonat | 134 |
| Bariumcarbonat | 98 |
| Kaliumcarbonat | 64 |
| gebranntes Aluminiumoxid | 65 |
| Magnesiumoxid | 4,8 |

Diese Versatzmasse wurde in einen Schmelzofen gegeben und 35 min bei 1 371 °C (2 500 °F) zusammengeschmolzen. Sie wurde dann in Wasser gegossen, um sie zu fritten, und die Fritte wurde trocknen gelassen. Die Fritte hatte die folgende Zusammensetzung :

| Oxid | Menge % |
|---|---|
| $K_2O$ | 2,70 |
| $Na_2O$ | 1,83 |
| CaO | 9,43 |
| MgO | 0,40 |
| BaO | 2,49 |
| SrO | 3,06 |
| ZnO | 10,94 |
| $B_2O_3$ | 5,41 |
| $Al_2O_3$ | 7,33 |
| $SiO_2$ | 55,89 |
| $ZrO_2$ | 0,51 |

Die Fritte wurde dann getrocknet und in der Kugelmühle vermahlen. Anschließend wurden 100 Teile der kugelgemahlenen Fritte, 2 Teile Bentonit und 45 Teile Wasser 1 h lang zusammen in einer Kugelmühle gemahlen, und die Mischung wurde auf verschrühtes keramisches Tafelgeschirr und auf eine vorher mit Unterglasur-Verzierungen beschichtete Fliese aufgespritzt. Die beschichteten Gegenstände wurden dann getrocknet und 1 h bei 1 177 °C (2 150 °F) gebrannt.

Die vorher mit Unterglasur-Verzierungen beschichtete Fliese wurde dann visuell auf Beständigkeit der Verzierungen und Abwesenheit einer Trübung geprüft. Die Fliese wurde dann nach einer Skala von 1 bis 10 bewertet, auf der 1 einen Überzug bezeichnet, der vollständig abgebaut worden war, und 10 einen Überzug bezeichnet, der vollständig stabil war. Die Fliese aus Beispiel 1 wurde mit 7 bewertet.

Die Teller des Tafelgeschirrs wurden dann visuell auf Glanz und auf Oberflächendefekte wie Nadelstiche, Steinchen oder Gasblasen geprüft. Das Ausmaß der Schäden wurde nach einer Skala von 1 bis 10 bewertet, wobei 1 einen Überzug bezeichnete, bei dem nicht mehr als eine Schadstelle beobachtet wurde, während mit 10 ein Überzug bewertet wurde, der wesentliche Schäden aufwies. Beispiel 1 ergab eine Bewertung von 3.

Als Maß für die Fähigkeit der Glasur, über das Substrat zu fließen und es während des Brennens zu überziehen, wurde der Donut-Test durchgeführt. Bei diesem Test werden kringelförmige (wie ringförmige Berliner Pfannkuchen, donuts) Proben im Ofen erhitzt, bis merkliche Erweichung auftritt. Der Durchmesser des inneren Loches des Donut wird dann gemessen. In allen Fällen wird ein Standard verwendet, und die Versuchsergebnisse werden entsprechend auf gleichbleibende Basiswerte korrigiert. Die Ergebnisse werden in Millimetern angegeben, und je kleiner deren Zahl ist, um so fließfähiger ist der Überzug. Beispiel 1 ergab einen Wert für den Durchmesser von 10 mm.

Beispiel 2-7

Die in Tabelle I angegebenen Versatzmassen wurden eingewogen und in einem V-Mischer vermischt. Diese Versatzmassen wurden in einen Schmelzofen gegeben und 35 min bei 1 371 °C (2 500 °F) zusammengeschmolzen. Dann wurden sie in Wasser gegossen, um sie zu fritten, und die Fritten wurden trocknen gelassen. Die Fritten hatten die in Tabelle II angegebenen Zusammensetzungen.

Die Fritten wurden dann getrocknet und in der Kugelmühle vermahlen. Anschließend wurden 100 Teile der kugelgemahlenen Fritte, 2 Teile Bentonit und 45 Teile Wasser zusammen 1 h in einer Kugelmühle vermahlen, und die Mischungen wurden auf verschrühtes keramisches Tafelgeschirr und auf eine vorher mit Unterglasur-Verzierungen beschichtete Fliese aufgespritzt. Die beschichteten Gegenstände wurden dann getrocknet und 1 h bei 1 177 °C (2 150 °F) gebrannt.

Die gebrannten Erzeugnisse wurden dann visuell auf die Beständigkeit der Unterglasur-Verzierungen, Glasur-Defekte und Fließfähigkeit visuell geprüft, wie in Beispiel 1 beschrieben. Die Ergebnisse sind in Tabelle III aufgeführt.

Im sämtlichen Fällen wurde die Beständigkeit der Unterglasurfarbe mit 4 oder höher bewertet. Die Glasurdefekte wurden mit 5 oder weniger bewertet. Die Fließfähigkeit, gemessen mittels des Donut-Tests, wurde zu 14 mm oder weniger gefunden.

Um darzustellen, wie kritisch die in der vorliegenden Erfindung angegebenen Grenzwerte sind, sind in Tabelle IV die Formeln von 7 Fritten zusammengestellt, die den vorgenannten Beispielen sehr ähnlich waren, sich jedoch in mindestens einer Hinsicht von den beanspruchten Grenzwerten unterschieden. Die Zusammensetzung A enthielt überschüssiges Boroxid, die Zusammensetzung B hatte einen zu niedrigen Siliciumdioxid-Gehalt. Die Zusammensetzung C und ebenso die Zusammensetzung D hatten einen zu hohen Zinkoxid-Gehalt. Die Zusammensetzung E enthielt zuviel Siliciumdioxid. Die Zusammensetzung F enthielt zu wenig Zinkoxid und die Zusammensetzung G hatte einen zu hohen Alkali-Gehalt.

Nach der Verarbeitung dieser Fritten in der gleichen Weise wie in Beispiel 1 beschrieben zu keramischen Glasuren und Untersuchung der erhaltenen Keramikprodukte wurden die in Tabelle V aufgeführten Ergebnisse erhalten. Es wurde gefunden, daß in jedem Falle eines oder mehrere der Ergebnisse schlechter waren als diejenigen, die für die Glasuren gemäß der vorliegenden Erfindung gefunden wurden. Die Beispiele A, B, C, D und G zeigten eine Beständigkeit der Unterglasurfarbe, die derjenigen der Glasuren der vorliegenden Erfindung unterlegen war. Die Glasuren B, C und F zeigten ein signifikant höheres Auftreten von Glasurschäden als die Glasuren der vorliegenden Erfindung. Die Glasur E war erheblich schlechter fließfähig als die Glasuren der vorliegenden Erfindung.

Tabelle I

Beispiele 2-7

Verwendete Rohversatzmassen

| Stoff | 2 Teile | 3 Teile | 4 Teile | 5 Teile | 6 Teile | 7 Teile |
|---|---|---|---|---|---|---|
| Siliciumdioxid | 1013 | 1037 | 1163 | 1205 | 1189 | 1045 |
| Feldspat | 1046 | 1071 | 959 | 993 | 832 | 1079 |
| Zinkoxid | 336 | 266 | 239 | 319 | 265 | 347 |
| Borsäure | 295 | 194 | 270 | 180 | 193 | 195 |

Tabelle I

| Stoff | 2 Teile | 3 Teile | 4 Teile | 5 Teile | 6 Teile | 7 Teile |
|---|---|---|---|---|---|---|
| Kreide | 462 | 547 | 490 | 438 | 592 | 476 |
| Zirkon | 23,5 | 24 | 23,7 | 24,5 | 23,9 | 24,2 |
| Strontiumcarbonat | 125 | 145 | 130 | 118 | 156 | 129 |
| Bariumcarbonat | 90 | 105 | 94 | 86 | 112 | 93 |
| Kaliumcarbonat | 84 | 85 | 77 | 79 | 66 | 86 |
| gebranntes Aluminiumoxid | 20,5 | 21 | 50 | 52 | 67 | 21,1 |
| Magnesiumoxid | 4,5 | 5,1 | 4,6 | 4,3 | 5,4 | 4,7 |

Tabelle II

Beispiele 2-7

Zusammensetzungen der Fritten

(Gewichts-%)

| Oxid | 2 | 3 | 4 | 5 | 6 | 7 |
|---|---|---|---|---|---|---|
| $K_2O$ | 3.48 | 3.57 | 3.19 | 3.24 | 2.77 | 3.55 |
| $Na_2O$ | 2.34 | 2.40 | 2.15 | 2.18 | 1.87 | 2.39 |
| $CaO$ | 8.71 | 10.24 | 9.16 | 8.10 | 10.97 | 8.89 |
| $MgO$ | 0.37 | 0.43 | 0.38 | 0.34 | 0.46 | 0.38 |
| $BaO$ | 2.29 | 2.68 | 2.39 | 2.13 | 2.87 | 2.34 |
| $SrO$ | 2.84 | 3.30 | 2.96 | 2.64 | 3.57 | 2.90 |
| $ZnO$ | 10.92 | 8.66 | 7.75 | 10.15 | 8.67 | 11.13 |
| $B_2O_3$ | 5.40 | 3.55 | 4.96 | 3.22 | 3.56 | 3.54 |
| $Al_2O_3$ | 7.32 | 7.50 | 7.72 | 7.83 | 7.51 | 7.47 |
| $SiO_2$ | 55.81 | 57.16 | 58.81 | 59.64 | 57.23 | 56.91 |
| $ZrO_2$ | 0.51 | 0.52 | 0.52 | 0.52 | 0.52 | 0.52 |

Tabelle III

Beispiele 2-7

Ergebnisse

| | 2 | 3 | 4 | 5 | 6 | 7 |
|---|---|---|---|---|---|---|
| Unterglasur Farbbeständigkeit | 4 | 7 | 5 | 7 | 10 | 7 |
| Glasurdefekte | 2 | 2 | 3 | 1 | 5 | 4 |
| Donut-Test | 11 | 10 | 14 | 13 | 13 | 11 |

Tabelle IV

Ähnliche Zusammensetzungen der Fritten, die jedoch ausserhalb der angegebenen Grenzwerte liegen

Gewichts-%

| Oxid | A | B | C | D | E | F | G |
|---|---|---|---|---|---|---|---|
| $K_2O$ | 2.55 | 2.95 | 3.47 | 2.69 | 2.24 | 2.72 | 4.22 |
| $Na_2O$ | 1.72 | 2.00 | 2.33 | 1.82 | 1.52 | 1.85 | 2.88 |
| CaO | 8.88 | 10.29 | 7.33 | 8.04 | 7.82 | 12.04 | 8.01 |
| MgO | 0.38 | 0.44 | 0.32 | 0.35 | 0.33 | 0.51 | 0.33 |
| BaO | 2.34 | 2.72 | 1.97 | 2.10 | 2.06 | 3.15 | 2.10 |
| SrO | 2.88 | 3.34 | 2.40 | 2.62 | 2.54 | 3.91 | 2.58 |
| ZnO | 10.30 | 11.94 | 13.46 | 13.49 | 9.07 | 6.14 | 10.91 |
| $B_2O_3$ | 10.91 | 5.91 | 5.38 | 5.39 | 4.49 | 5.46 | 5.40 |
| $Al_2O_3$ | 6.91 | 6.94 | 7.29 | 7.30 | 8.05 | 7.39 | 7.31 |
| $SiO_2$ | 52.65 | 52.97 | 55.55 | 55.68 | 61.32 | 56.32 | 55.75 |
| $ZrO_2$ | 0.48 | 0.50 | 0.51 | 0.51 | 0.55 | 0.52 | 0.51 |

Tabelle V

Ergebnisse Ähnlicher Glasuren, deren Zusammensetzungen jedoch ausserhalb der angegebenen Grenzwerte liegen

| | A | B | C | D | E | F | G |
|---|---|---|---|---|---|---|---|
| Unterglasur Farbbeständigkeit | 1 | 3 | 1 | 1 | 6 | 4 | 1 |
| Glasurdefekte | 5 | 9 | 9 | 5 | 4 | 6 | 0 |
| Donut-Test | 9 | 9 | 10 | 9 | 17 | 12 | 9 |

**Ansprüche**

1. Keramische Fritte, die nach dem Zusammenschmelzen aus

a) von 4,0 bis 6,5 Gew.-% eines Bestandteils aus der Gruppe Kaliumoxid, Natriumoxid, Lithiumoxid und Mischungen aus diesen ;
b) von 7,0 bis 12,5 Gew.-% Zinkoxid ;
c) von 7,0 bis 12,0 Gew.-% Kalziumoxid ;
d) von 0 bis 0,7 Gew.-% Magnesiumoxid ;
e) von 0 bis 5,0 Gew.-% Bariumoxid ;
f) von 2,0 bis 4,0 Gew.-% Strontiumoxid ;
g) von 2,5 bis 6,0 Gew.-% Boroxid ;

7

h) von 7,0 bis 8,5 Gew.-% Aluminiumoxid ;
i) von 54,0 bis 60,0 Gew.-% Siliciumdioxid und
j) von 0 bis 1,0 Gew.-% Zirkoniumoxid,

besteht, wobei alle diese Gewichtsprozent-Angaben sich auf das Gesamtgewicht der Bestandteile (a) bis (j) beziehen.

2. Keramische Glasur, enthaltend mindestens 80 Gew.-% der Fritte nach Anspruch 1, wobei der Rest ausgewählt wird aus der Gruppe Bentonit, Ton, Flint, Aluminiumoxid, Pigmente, Trübungsmittel und Mischungen aus diesen.

3. Produkt hergestellt durch Aufbringen der Glasur nach Anspruch 2 auf einen Keramikkörper und Brennen des beschichteten Körpers bei 1 038 °C bis 1 204 °C (1 900-2 200 °F).

4. Keramische Glasur, die nach dem Brennen aus

a) von 3,5 bis 6,5 Gew.-% eines Bestandteils aus der Gruppe Kaliumoxid, Natriumoxid, Lithiumoxid und Mischungen aus diesen ;
b) von 6,0 bis 12,5 Gew.-% Zinkoxid ;
c) von 6,0 bis 12,0 Gew.-% Kalziumoxid ;
d) von 0 bis 0,7 Gew.-% Magnesiumoxid ;
e) von 0 bis 5,0 Gew.-% Bariumoxid ;
f) von 1,7 bis 4,0 Gew.-% Strontiumoxid ;
g) von 2,0 bis 6,0 Gew.-% Borsäure ;
h) von 7,0 bis 12,0 Gew.-% Aluminiumoxid ;
i) von 53,0 bis 61,0 Gew.-% Siliciumdioxid ;
j) von 0 bis 8,0 Gew.-% Zirkoniumoxid,

besteht, wobei alle diese Gewichtsangaben sich auf das Gesamtgewicht der Bestandteile (a) bis (j) plus etwaiger zusätzlicher Pigmente beziehen, die zur Färbung einer solchen Glasur zugesetzt werden.

5. Produkt hergestellt durch Aufbringen der Glasur nach Anspruch 4 auf einen Keramikkörper und Brennen des beschichteten Körpers bei 1 038 °C bis 1 204 °C (1 900°-2 200 °F).

**Claims**

1. Ceramic frits which, when smelted, consist of

a) 4.0 to 6.5 % by weight of a component from the group comprising potassium oxide, sodium oxide, lithium oxide and mixtures thereof ;
b) 7.0 to 12.5 % by weight of zinc oxide ;
c) 7.0 to 12.0 % by weight of calcium oxide ;
d) 0 to 0.7 % by weight of magnesium oxide ;
e) 0 to 5.0 % by weight of barium oxide ;
f) 2.0 to 4.0 % by weight of strontium oxide ;
g) 2.5 to 6.0 % by weight of boric oxide ;
h) 7.0 to 8.5 % by weight of aluminium oxide ;
i) 54.0 to 60.0 % by weight of silicon dioxide and
j) 0 to 1.0 % by weight of zirconium oxide,

all of these percents by weight referring to the total weight of components (a) to (j).

2. Ceramic glaze containing at least 80 % by weight of the frit according to Claim 1, the remainder being selected from the group comprising bentonite, clay, flint, aluminium oxide, pigments, opacifiers and mixtures thereof.

3. Product produced by applying the glaze according to Claim 2 to a ceramic body and firing the coated body at 1 038 °C to 1 204 °C (1 900-2 200 °F).

4. Ceramic glaze which, after firing, consists of

a) 3.5 to 6.5 % by weight of a component from the group comprising potassium oxide, sodium oxide, lithium oxide and mixtures thereof ;
b) 6.0 to 12.5 % by weight of zinc oxide ;
c) 6.0 to 12.0 % by weight of calcium oxide ;
d) 0 to 0.7 % by weight of magnesium oxide ;
e) 0 to 5.0 % by weight of barium oxide ;
f) 1.7 to 4.0 % by weight of strontium oxide ;
g) 2.0 to 6.0 % by weight of boric oxide ;
h) 7.0 to 12.0 % by weight of aluminium oxide ;
i) 53.0 to 61.0 % by weight of silicon dioxide ; and
j) 0 to 8.0 % by weight of zirconium oxide,

all of these percents by weight referring to the total weight of components (a) to (j) plus any additional pigments added to colour such a glaze.

5. Product produced by applying the glaze according to Claim 4 to a ceramic body and firing the coated body at 1 038 °C to 1 204 °C (1 900°-2 200 °F).

**Revendications**

1. Fritte céramique qui se compose, après fusion, de

a) 4,0 à 6,5 % en poids d'un constituant du groupe comprenant l'oxyde de potassium, l'oxyde de sodium, l'oxyde de lithium et des mélanges de ces oxydes ;
   b) 7,0 à 12,5 % en poids d'oxyde de zinc ;
   c) 7,0 à 12,0 % en poids d'oxyde de calcium ;
   d) 0 à 0,7 % en poids d'oxyde de magnésium ;
   e) 0 à 5,0 % en poids d'oxyde de baryum ;
   f) 2,0 à 4,0 % en poids d'oxyde de strontium ;
   g) 2,5 à 6,0 % en poids d'oxyde de bore ;
   h) 2,5 à 8,5 % en poids d'oxyde d'aluminium ;
   i) 54,0 à 60,0 % en poids de dioxyde de silicium ; et
   j) 0 à 1,0 % en poids d'oxyde de zirconium,

toutes ces indications de pourcentages en poids se rapportant au poids total des composants (a) à (j).

2. Couverte céramique, contenant au moins 80 % en poids de la fritte suivant la revendication 1, le reste étant choisi dans le groupe comprenant la bentonite, l'argile, le verre Flint, l'oxyde d'aluminium, des pigments, des opacifiants et leurs mélanges.

3. Produit obtenu par application de la couverte suivant la revendication 2, sur un corps céramique et cuisson du corps revêtu à 1 038-1 204 °C (1 900-2 200 °F).

4. Couverte céramique qui se compose après cuisson, de

a) 3,5 à 6,5 % en poids d'un constituant du groupe comprenant l'oxyde de potassium, l'oxyde de sodium, l'oxyde de lithium et des mélanges de ces oxydes ;
   b) 6,0 à 12,5 % en poids d'oxyde de zinc ;
   c) 6,0 à 12,0 % en poids d'oxyde de calcium ;
   d) 0 à 0,7 % en poids d'oxyde de magnésium ;
   e) 0 à 5,0 % en poids d'oxyde de baryum ;
   f) 1,7 à 4,0 % en poids d'oxyde de strontium ;
   g) 2,0 à 6,0 % en poids d'acide borique ;
   h) 7,0 à 12,0 % en poids d'oxyde d'aluminium ;
   i) 53,0 à 61,0 % en poids de dioxyde de silicium ;
   j) 0 à 8,0 % en poids d'oxyde de zirconium,

toutes ces indications de poids se rapportant au poids total des composants (a) à (j) plus des pigments additionnels éventuels qui sont ajoutés pour colorer une telle couverte.

5. Produit obtenu par application de la couverte suivant la revendication 4, sur un corps céramique et cuisson du corps revêtu à 1 038-1 204 °C (1 900-2 200 °F).